# EUROPÄISCHE PATENTSCHRIFT

(11) **EP 2 631 682 B1**
(45) Veröffentlichungstag und Bekanntmachung des Hinweises auf die Patenterteilung: **26.06.2019**
(21) Anmeldenummer: 13152362.3
(22) Anmeldetag: 23.01.2013
(51) Int. Cl.: G01V 8/20

(54) **Sensoranordnung**
Sensor assembly
Dispositif de détection

(30) Priorität: 23.02.2012 DE 102012101431
(43) Veröffentlichungstag der Anmeldung: 28.08.2013
(73) Patentinhaber: Leuze electronic GmbH + Co KG, 73277 Owen/Teck (DE)
(72) Erfinder: Müller Dr., Bernhard, 71083 Herrenberg (DE); Mück, Armin, 72124 Pliezhausen (DE); Schönleitner, Arnold, 3002 Purkersdorf (AT); Schedlberger, Robert, 4283 Bad Zell (AT)
(74) Vertreter: Ruckh, Rainer Gerhard

(56) Entgegenhaltungen:
- EP-A2- 2 631 681
- JP-A- 2008 116 217

## Beschreibung

Die Erfindung betrifft eine Sensoranordnung. Eine derartige Sensoranordnung umfasst generell eine Mehrfachanordnung von Lichtvorhängen.

Die einzelnen Lichtvorhänge dienen jeweils zur Erfassung von Objekten in einem Überwachungsbereich und umfassen eine Sendereinheit mit einer Anordnung von Lichtstrahlen emittierenden Sendern und eine Empfängereinheit mit einer Anordnung von Lichtstrahlen empfangenden Empfängern. Die Sender- und Empfängereinheit sind an gegenüberliegenden Rändern des Überwachungsbereichs so angeordnet, dass bei freiem Überwachungsbereich die Lichtstrahlen eines Senders auf einen zugeordneten gegenüberliegenden Empfänger treffen. Dieses Sender-/Empfängerpaar bildet eine Strahlachse des Lichtvorhangs. Die einzelnen Strahlachsen des Lichtvorhangs definieren die Größe des Überwachungsbereichs und werden zyklisch einzeln nacheinander aktiviert.

Zur Generierung eines Objektfeststellungssignals in Form eines binären Schaltsignals erfolgt in einer Auswerteeinheit des Lichtvorhangs mittels eines oder mehrerer Schwellwerte eine Amplitudenbewertung der Empfangssignale. Innerhalb eines Messzyklus, bei welchem alle Sender-/Empfängerpaare nacheinander aktiviert werden, wird geprüft, ob wenigstens die Lichtstrahlen einer Strahlachse unterbrochen sind. Ist dies der Fall, wird von der Auswerteeinheit als Schaltsignalzustand eine Objektmeldung ausgegeben. Ist keine der Strahlachsen unterbrochen, wird als Schaltsignalzustand ein freier Überwachungsbereich gemeldet.

Um in einem größeren Bereich eine Objekterfassung zu ermöglichen, ist es bekannt, mehrere Lichtvorhänge zu einer Kaskade zusammenzuschließen. Damit kann eine Objektüberwachung in einem Bereich erfolgen, der im Wesentlichen der Summe der einzelnen Überwachungsbereichen des Lichtvorhangs der Kaskade entspricht. Weiterhin werden Kaskaden von Lichtvorhängen vorteilhaft so eingesetzt, dass sich die einzelnen Lichtvorhänge der Kaskade optisch nicht beeinflussen.

Zur Ausbildung einer solchen Kaskade muss jeder Lichtvorhang zwei Steckverbindungen aufweisen, wobei ein Steckverbinder einen Kaskadierungsausgang und ein Steckverbinder einen Kaskadierungseingang bildet. Zur Bildung der Kaskade wird jeweils vom Kaskadierungsausgang eines Lichtvorhangs eine Leitung auf den Kaskadierungseingang des nächsten Lichtvorhangs geführt. Die Lichtvorhänge der Kaskade werden einzeln nacheinander nach einem Daisy-chain-Mechanismus aktiviert, indem jeder Lichtvorhang von seinem Vorgänger eine Freigabe zur Durchführung eines Messvorgangs erhält. Dabei gibt ein Lichtvorhang dann eine solche Freigabe weiter, nachdem in diesem Lichtvorhang ein Messvorgang abgeschlossen ist. Die einzelnen Messvorgänge umfassen jeweils eine bestimmte Anzahl von Messzyklen, bei dem jeweils alle Sender-/Empfängerpaare des Lichtvorhangs einzeln zyklisch nacheinander aktiviert werden.

Da die Messvorgänge der einzelnen Lichtvorhänge einzeln nacheinander durchgeführt werden, ergibt sich eine unerwünscht lange Durchlaufzeit für eine Messung mit allen Lichtvorhängen der Kaskade. Da die Messzyklen und damit die Zeitintervalle für die Messvorgänge abhängig von der Zahl der Sender-/Empfängerpaare der einzelnen Lichtvorhänge sind, ist auch die gesamte Durchlaufzeit keine feste Größe sondern ebenfalls abhängig von der Zahl der Sender-/Empfängerpaare der einzelnen Lichtvorhänge. Weiterhin ist nachteilig, dass die Messzeiten der einzelnen Lichtvorhänge in der Kaskade nicht bekannt sind.

Ein weiterer Nachteil besteht darin, dass ein Lichtvorhang zur Einbindung in eine Kaskade zwei hierfür eigens vorgesehene Anschlüsse aufweisen muss, nämlich einen Kaskadierungsausgang und einen Kaskadierungseingang, was einen unerwünschten zusätzlichen konstruktiven Aufwand für die Lichtvorhänge bedeutet.

Eine Sensoranordnung mit den Merkmalen des Oberbegriffs des Anspruchs 1 ist aus der JP 2008 116 217 A bekannt.

Der Erfindung liegt die Aufgabe zugrunde, eine Sensoranordnung mit einer Mehrfachanordnung von Lichtvorhängen bereitzustellen, welche bei geringem konstruktivem Aufwand eine höhere Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Sensoranordnung umfasst eine Anordnung von Lichtvorhängen sowie einen Trigger-Generator, welcher zyklisch Trigger-Signale generiert. Jedes Trigger-Signal wird den Lichtvorhängen zugeführt. In jedem Lichtvorhang wird durch ein empfangenes Trigger-Signal nach einer vorgegebenen Verzögerungszeit ein Messvorgang gestartet. Jedes Trigger-Signal ist den Lichtvorhängen parallel zugeführt.

Ein wesentlicher Vorteil der Erfindung besteht darin, dass die Zeiten, zu dessen die Messvorgänge mit den einzelnen Lichtvorhängen durchgeführt werden, frei wählbar sind. Die Reihenfolge der Messvorgänge ist insbesondere nunmehr von der Reihenfolge der Lichtvorhänge innerhalb der Sensoranordnung unabhängig und kann so an die jeweiligen Applikationen flexibel angepasst werden.

Ein besonderer Vorteil der erfindungsgemäßen Sensoranordnung besteht darin, dass auch Messvorgänge von verschiedenen Lichtvorhängen zeitlich überlappend oder sogar gleichzeitig durchgeführt werden können. Besonders vorteilhaft wird applikationsabhängig eine zeitlich überlappende oder gleichzeitige Durchführung von Messvorgängen für solche Lichtvorhänge vorgenommen, die zueinander so angeordnet sind, dass diese sich nicht gegenseitig optisch beeinflussen können. Damit werden Fehldetektionen durch derartige optische Beeinflussungen auf einfache Weise ausgeschlossen.

Durch die Parallelisierung der Messvorgänge können die Durchlaufzeiten für die Aktivierung der einzelnen Messvorgänge und damit die Reaktionszeiten der erfindungsgemäßen Sensoranordnung erheblich reduziert werden, die Taktraten für die Erzeugung von Objektfeststellungsignalen werden erhöht. Durch die so erzielte schnellere Objekterfassung wird auch die Nachweissicherheit der Sensoranordnung erhöht.

Besonders vorteilhaft generiert der Trigger-Generator periodisch innerhalb einer Zykluszeit jeweils ein Trigger-Signal in Form eines Trigger-Impulses. Jeder Messvorgang dauert eine bestimmte Messzeit, wobei die Messzeit aller Lichtvorhänge innerhalb einer Zykluszeit liegt.

Mit dieser Ausführung wird ein periodischer Betrieb der Sensoranordnung gewährleistet, wobei die Zykluszeit eine Periodendauer darstellt, in welcher die einzelnen Lichtvorhänge jeweils einen Messvorgang durchführen.

Das Trigger-Signal in Form eines Trigger-Impulses liefert einen definierten Referenzzeitpunkt für die einzelnen Verzögerungszeiten und damit für den Start der Messvorgänge in den einzelnen Lichtvorhängen.

Erfindungsgemäß vorteilhaft ist jedes Trigger-Signal den Lichtvorhängen parallel zugeführt.

Das Trigger-Signal oder insbesondere der Trigger-Impuls liegt somit gleichzeitig an allen Lichtvorhängen und definiert somit einen für alle Lichtvorhänge gültigen Referenzzeitpunkt für den Beginn einer Zykluszeit. Dies ist eine wesentliche Voraussetzung, dass die einen Messvorgänge zeitlich zueinander genau abgestimmt werden können und dabei innerhalb der vorgegebenen Zykluszeit liegen.

Die relativen Zeiten der Messvorgänge innerhalb der Zykluszeit werden durch die einzelnen Verzögerungszeiten bestimmt. Diese sind als einstellbare Parameter in den jeweiligen Lichtvorhängen hinterlegt. Durch die Vorgabe der Verzögerungszeiten in einem Parametriervorgang kann damit das Zeitverhalten der Sensoranordnung einfach vorgegeben werden.

Die erfindungsgemäße Sensoranordnung wird vorteilhaft dadurch ausgebildet, dass die Lichtvorhänge und der Trigger-Generator über ein Leitungen aufweisendes Leitungssystem verbunden sind, wobei die Lichtvorhänge zum Anschluss von Leitungen nur einen Anschluss aufweisen.

Da nur noch ein Anschluss und nicht mehr, wie dies bei bekannten Lichtvorhang-Kaskaden der Fall ist, ein separater Kaskadierausgang und Kaskadiereingang vorgesehen werden muss, wird der konstruktive Aufwand der Lichtvorhänge zur Einbindung in die Sensoranordnung erheblich verringert.

Gemäß einer ersten Variante ist der Trigger-Generator in einer externen, von den Lichtvorhängen unabhängigen Einheit integriert. Die Anschlüsse der Lichtvorhänge sind jeweils als Eingänge ausgebildet.

Die externe Einheit kann beispielsweise von einer Steuerung gebildet sein. Mit dieser Steuerung kann der Betrieb einer Maschine oder Anlage in Abhängigkeit der mit der Sensoranordnung durchgeführten Objekterfassungen durchgeführt werden. Hierzu kann in der Steuereinheit eine zentrale Auswertung der mit den einzelnen Lichtvorhängen durchgeführten Objektdetektionen erfolgen. Je nach Applikation können in den einzelnen Lichtvorhängen jeweils separate Objektfeststellungssignale generiert werden, die in der Steuerung gemeinsam ausgewertet werden. Alternativ können die Messergebnisse der einzelnen Lichtvorhänge direkt in der Steuerung ausgewertet werden, so dass erst in der Steuerung ein Objektfeststellungssignal für die gesamte Sensoranordnung generiert wird.

Gemäß einer zweiten Variante ist der Trigger-Generator in einem Lichtvorhang integriert, dessen Anschluss wahlweise als Eingang oder Ausgang schaltbar ist. Die Anschlüsse der restlichen Lichtvorhänge sind jeweils als Eingänge ausgebildet.

Auch in diesem Fall wird für dieses eine gemeinsame Objektfeststellungssignal oder für jeden Lichtvorhang ein separates Objektfeststellungssignal generiert.

Die Erfindung wird im Folgenden anhand der Zeichnungen erläutert. Es zeigen:
- Figur 1:: Erstes Ausführungsbeispiel der erfindungsgemäßen Sensoranordnung.
- Figur 2:: Zeitdiagramme für den Betrieb der Sensoranordnung gemäß Figur 1.
- Figur 3:: Zweites Ausführungsbeispiel der erfindungsgemäßen Sensoranordnung.
- Figur 4:: Zeitdiagramme für den Betrieb der Sensoranordnung gemäß Figur 3.

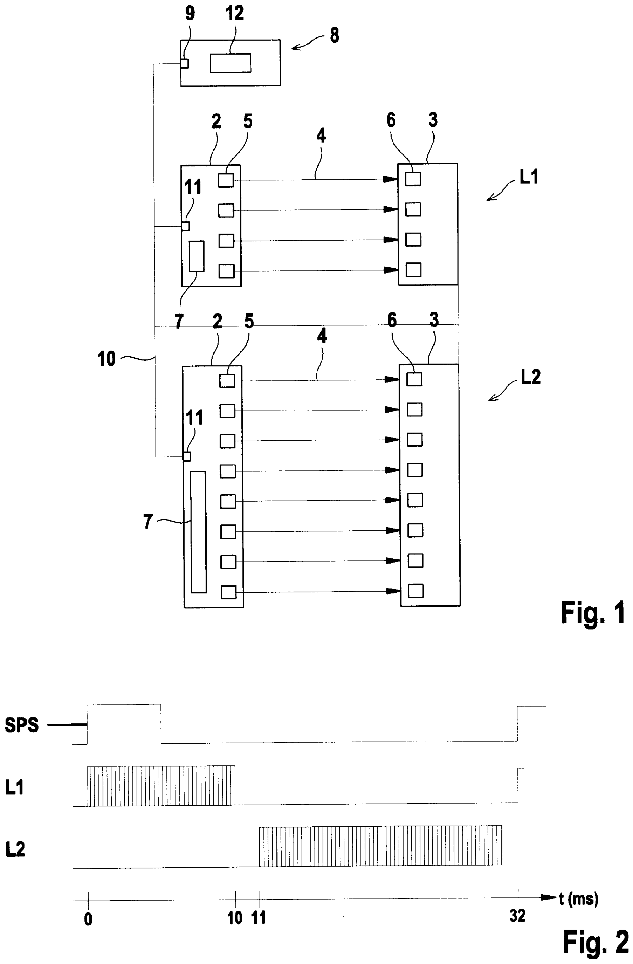

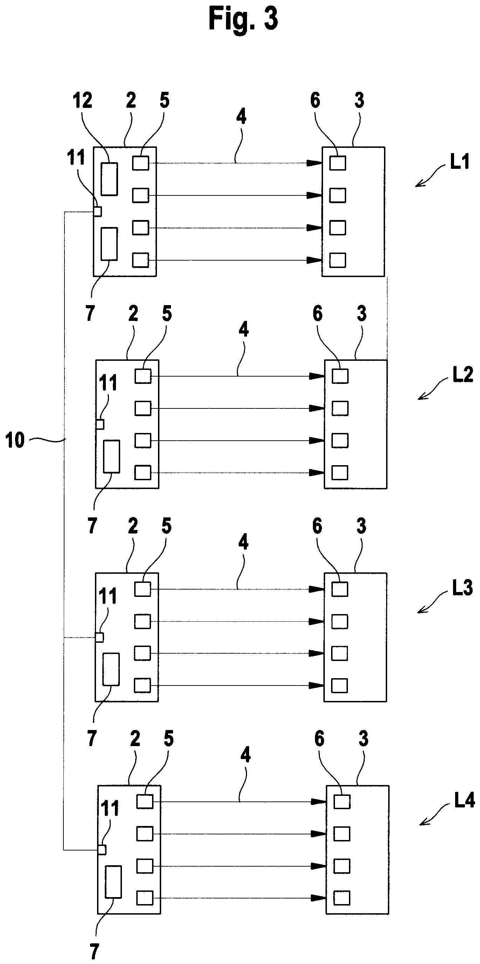

Die Figuren 1 und 3 zeigen zwei Ausführungsbeispiele einer Sensoranordnung 1 mit mehreren Lichtvorhängen L1, L2 beziehungsweise L1-L4.

Jeder Lichtvorhang L1-L4 umfasst eine Sendereinheit 2 mit einem ersten Gehäuse und eine Empfängereinheit 3 mit einem zweiten Gehäuse. Die Sendereinheit 2 und Empfängereinheit 3 sind an gegenüberliegenden Rändern eines Überwachungsbereichs angeordnet, innerhalb dessen mit dem Lichtvorhang L1-L4 Objekte erfasst werden können.

Im dem Gehäuse der Sendereinheit 2 befindet sich eine Linearanordnung von Lichtstrahlen 4 emittierenden Sendern 5. In dem Gehäuse der Empfängereinheit 3 befindet sich eine der Zahl der Sender 5 entsprechende Anzahl von Lichtstrahlen 4 empfangenden Empfängern 6, die ebenfalls eine Linearanordnung bilden.

Jedem Sender 5 ist ein gegenüberliegend angeordneter Empfänger 6 so zugeordnet, dass bei freiem Überwachungsbereich die Lichtstrahlen 4 dieses Senders 5 auf diesen zugeordneten Empfänger 6 treffen. Damit bilden diese Sender 5 und Empfänger 6 ein Sender-/Empfängerpaar und eine sogenannte Strahlachse des Lichtvorhangs L1-L4 aus.

Die Sender-/Empfängerpaare jedes Lichtvorhangs L1-L4 werden über eine Auswerte- und Steuereinheit 7, an welche sowohl die Sender 5 und Empfänger 6 angeschlossen sind, einzeln zyklisch nacheinander aktiviert. Die Aktivierung der Sender-/Empfängerpaare erfolgt zyklisch innerhalb fest vorgegebener Messzyklen, wobei innerhalb eines jeden Messzyklus jedes Sender-/Empfängerpaar einmal aktiviert wird.

In der Auswerte- und Steuereinheit 7 erfolgt weiterhin eine Objekterfassung. Hierzu wird in der Auswerteeinheit eine Schwellwertbewertung der Empfangssignale aller Empfänger 6 durchgeführt. Durch diese Schwellwertbewertung wird erfasst, ob die Lichtstrahlen 4 einer Strahlachse durch einen Objekteingriff unterbrochen sind oder nicht. Anhand dieser Strahlunterbrechung wird generell ein Objektfeststellungssignal generiert, beispielsweise in Form eines Schaltsignals, welches meldet ob ein Objekt vorhanden ist oder nicht.

Bei der Sensoranordnung 1 gemäß Figur 1 sind zwei Lichtvorhänge L1, L2 vorgesehen. Der Lichtvorhang L1 umfasst vier Strahlachsen, während der Lichtvorhang L2 acht Strahlachsen umfasst. Die Lichtvorhänge L1, L2 sind an eine Steuerung 8 angeschlossen, die im vorliegenden Fall als SPS Steuerung ausgebildet ist. Von einem Anschluss 9 der Steuerung 8 ist eine Leitung 10 auf Anschlüsse 11 der Lichtvorhänge L1, L2 geführt, die im vorliegenden Fall als Eingänge ausgebildet sind. Die Lichtvorhänge L1, L2 sind über die Leitung 10 parallel an die Steuerung 8 angeschlossen.

In der Steuerung 8 ist ein Trigger-Generator 12 vorgesehen, der Trigger-Signale in Form von Trigger-Impulsen generiert. Zur Steuerung 8 des Zeitverhaltens der Lichtvorhänge L1, L2 werden diese Trigger-Impulse über die Leitungen 10 an die beiden Lichtvorhänge L1, L2 ausgegeben.

Dieses Zeitverhalten ist in Figur 2 dargestellt. Mit SPS ist die periodische Folge von Trigger-Impulsen bezeichnet, die im Trigger-Generator 12 generiert und parallel an die Lichtvorhänge L1, L2 ausgegeben werden. Jeweils zu Beginn einer Zykluszeit generiert der Trigger-Generator 12 einen Trigger-Impuls. Die Zykluszeit beträgt im vorliegenden Fall 32 ms. Die steigende Flanke des Trigger-Impulses bildet einen Triggerzeitpunkt für den Beginn eines Messvorgangs mit einem Lichtvorgang L1, L2. Der Beginn eines Messvorgangs innerhalb der Zykluszeit wird in jedem Lichtvorhang L1, L2 ausgehend vom Zeitpunkt der steigenden Flanke des von der Steuerung 8 empfangenen Tigger-Impulses berechnet. Hierzu ist in jedem Lichtvorhang L1, L2 eine Verzögerungszeit als einstellbarer Parameter hinterlegt. Zudem ist in jedem Lichtvorhang L1, L2 der Startzeitpunkt des Messvorgangs des Lichtvorhangs L1, L2 hinterlegt. Die Messzeiten betragen vorzugsweise ganzzahlige Vielfache der Messzyklen der jeweiligen Lichtvorhänge L1, L2. Im vorliegenden Fall ist im Lichtvorhang L1 die Verzögerungszeit 0 ms und im Lichtvorhang L2 die Verzögerungszeit 11 ms hinterlegt. Die Messzeit für den Lichtvorhang L1 beträgt 10 ms, die Messzeit des Lichtvorhang L2 beträgt 20 ms, da der Lichtvorhang L1 die doppelte Anzahl an Strahlachsen im Vergleich zum Lichtvorhang L2 aufweist. Mit diesen Parametern ergibt sich das in Figur 2 dargestellte Zeitverhalten. Mit der steigenden Flanke des Trigger-Impulses wird der Messvorgang des Lichtvorhangs L1 sofort gestartet, da dessen Verzögerungszeit 0 ms beträgt. Dieser Messvorgang dauert 10 ms. Da für den Lichtvorhang L2 die Verzögerungszeit 11 ms hinterlegt ist, wird der Messvorgang des zweiten Lichtvorhangs L2 erst 1 ms nach Deaktivieren des Messvorgangs des Lichtvorhangs L1 gestartet, so dass sich die Messungen beider Lichtvorhänge L1, L2 nicht beeinflussen. Der Messvorgang des zweiten Lichtvorhangs L2 endet 1 ms vor Ende der Zyluszeit. Nach dieser ersten Zykluszeit wird die zweite Zykluszeit mit dem nächsten Trigger-Impuls gestartet. Das Zeitverhalten der Lichtvorhänge L1, L2 in den weiteren Zykluszeiten ist identisch wie in der ersten Zykluszeit.

Generell kann jeder Lichtvorhang L1-L4 während eines Messvorgangs eigenständig Objektfeststellungssignale generieren. Prinzipiell ist es auch möglich, die Messergebnisse der einzelnen Lichtvorhänge L1, L2 in die Steuerung 8 einzulesen und dort zur Generierung eines Objektfeststellungssignals für die gesamte Sensoranordnung 1 auszuwerten.

Figur 3 zeigt eine Sensoranordnung 1 mit vier Lichtvorhängen L1-L4, die analog zur Ausführungsform gemäß Figur 1 Anschlüsse 11 aufweisen, wobei eine an die Anschlüsse 11 angeschlossene Leitung 10 die Lichtvorhänge L1-L4 in Form einer Parallelschaltung koppelt.

Im Unterschied zur Ausführungsform gemäß Figur 1 ist bei der Sensoranordnung 1 gemäß Figur 3 keine Steuerung 8 vorgesehen. Der Trigger-Generator 12 ist im vorliegenden Fall im ersten Lichtvorhang L1 integriert. Dessen Anschluss 9 kann als Eingang und Ausgang betrieben werden. Damit können über den Anschluss 9 die im Trigger-Signal generierten Trigger-Impulse allen weiteren Lichtvorhänge L2-L4 zugeführt werden, so dass mit den Trigger-Impulsen wieder das gesamte Zeitverhalten der Sensoranordnung 1 gesteuert werden kann.

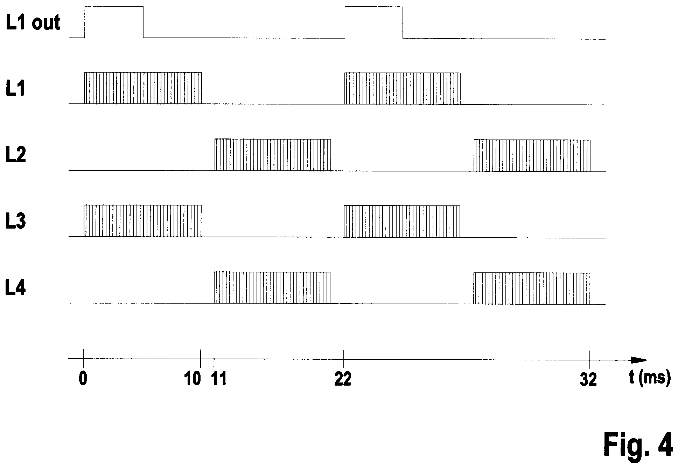

Im vorliegenden Fall weist die Sensoranordnung 1 vier identische Lichtvorhänge L1-L4 mit jeweils vier Strahlachsen auf. Innerhalb einer Zykluszeit, das heißt dem Zeitintervall zwischen zwei Trigger-Impulsen, wird jeder Lichtvorhang L1-L4 zur Durchführung eines Messvorgangs aktiviert. Die Messzeiten der Messvorgänge sind für alle Lichtvorhänge L1-L4 identisch und betragen 10 ms. Die Zykluszeit beträgt 22 ms. Figur 4 zeigt das Zeitverhalten der Sensoranordnung 1 von Figur 3 für zwei aufeinanderfolgende Zykluszeiten.

Der Beginn der einzelnen Messvorgänge errechnet sich wieder dadurch, dass für jeden Lichtvorhang L1-L4 zum Zeitpunkt der steigenden Flanke eines Trigger-Impulses eine Verzögerungszeit dazu gerechnet wird, welche als Parameterwert im jeweiligen Lichtvorhang L1-L4, insbesondere der Auswerte- und Steuereinheit 7, hinterlegt ist. Im vorliegenden Fall sind für die Lichtvorhänge L1, L3 identische Verzögerungszeiten 0 ms und für die Lichtvorhänge L2, L4 ebenfalls identische Verzögerungszeiten 11 ms hinterlegt. Damit führen die Lichtvorhänge L1, L3 zu identischen Messzeiten Messvorgänge, das heißt sie werden parallel betrieben. Auch die Lichtvorhänge L2 L4 werden parallel betrieben, jedoch zeitlich versetzt zu den Lichtvorhängen L1, L3.

Dieser Zeitablauf ist auf die räumliche Anordnung der Lichtvorhänge L1-L4 in der Sensoranordnung 1 gemäß Figur 3 abgestimmt. Da die Lichtvorhänge L1, L3 nicht direkt benachbart sind, können sich diese nicht gegenseitig optisch beeinflussen, das heißt ein Einstrahlen von Lichtstrahlen 4 des Lichtvorhangs L1 in den Lichtvorhang L3 oder umgekehrt ist nicht möglich. Daher können die Lichtvorhänge L1, L3 parallel betrieben werden. Dasselbe gilt für die Lichtvorhänge L2, L4, da auch diese nicht benachbart angeordnet sind.

Analog zur Ausführungsform gemäß Figur 1 kann auch bei der Sensoranordnung 1 gemäß Figur 3 für jeden Lichtvorhang L1-L4 ein separates Objektfeststellungssignal oder nur für die Sensoranordnung 1 ein gemeinsames Objektfeststellungssignal generiert werden.

### Bezugszeichenliste

- (1): Sensoranordnung
- (L1-L4): Lichtvorhang
- (2): Sendereinheit
- (3): Empfängereinheit
- (4): Lichtstrahlen
- (5): Sender
- (6): Empfänger
- (7): Auswerte- und Steuereinheit
- (8): Steuerung
- (9): Anschluss
- (10): Leitung
- (11): Anschlüsse
- (12): Trigger-Generator

## Patentansprüche

1. Sensoranordnung (1) mit einer Anordnung von Lichtvorhängen (L1-L4) sowie mit einem Trigger-Generator (12), welcher zyklisch Trigger-Signale generiert, wobei jedes Trigger-Signal den Lichtvorhängen (L1-L4) zugeführt wird, und wobei in jedem Lichtvorhang (L1-L4) durch ein empfangenes Trigger-Signal nach einer vorgegebenen Verzögerungszeit ein Messvorgang gestartet wird, **dadurch gekennzeichnet, dass** jedes Trigger-Signal den Lichtvorhängen (L-L4) parallel zugeführt ist.

2. Sensoranordnung nach Anspruch 1, **dadurch gekennzeichnet, dass** der Trigger-Generator (12) zyklisch innerhalb einer Zykluszeit jeweils ein Trigger-Signal in Form eines Trigger-Impulses generiert.

3. Sensoranordnung nach Anspruch 2, **dadurch gekennzeichnet, dass** jeder Messvorgang eine bestimmte Messzeit dauert, wobei die Messzeiten aller Lichtvorhänge (L1-L4) innerhalb einer Zykluszeit liegen.

4. Sensoranordnung nach Anspruch 3, **dadurch gekennzeichnet, dass** die Verzögerungszeiten in den jeweiligen Lichtvorhängen (L1-L4) abgespeichert sind.

5. Sensoranordnung nach Anspruch 4, **dadurch gekennzeichnet, dass** die Verzögerungszeiten einstellbare Parameter bilden.

6. Sensoranordnung nach einem der Ansprüche 1 bis 5, **dadurch gekennzeichnet, dass** die Lichtvorhänge (L1-L4) und der Trigger-Generator (12) über ein Leitungen (10) aufweisendes Leitungssystem verbunden sind, wobei die Lichtvorhänge (L1-L4) zum Anschluss (9) von Leitungen (10) nur einen Anschluss (9) aufweisen.

7. Sensoranordnung nach Anspruch 6, **dadurch gekennzeichnet, dass** der Trigger-Generator (12) in einer externen, von den Lichtvorhängen (L1-L4) unabhängigen Einheit integriert ist, und dass die Anschlüsse (11) der Lichtvorhänge (L1-L4) jeweils als Eingänge ausgebildet sind.

8. Sensoranordnung nach Anspruch 6, **dadurch gekennzeichnet, dass** der Trigger-Generator (12) in einem Lichtvorhang (L1-L4) integriert ist, dessen Anschluss (9) wahlweise als Eingang oder Ausgang schaltbar ist, und dass die Anschlüsse (11) der restlichen Lichtvorhänge (L1-L4) jeweils als Eingänge ausgebildet sind.

9. Sensoranordnung nach einem der Ansprüche 1 bis 8, **dadurch gekennzeichnet, dass** für diese ein gemeinsames Objektfeststellungssignal oder für jeden Lichtvorhang (L1-L4) ein separates Objektfeststellungssignal generiert wird.

## Claims

1. A sensor arrangement (1) having an arrangement of light curtains (L1-L4) and having a trigger generator (12) which cyclically generates trigger signals, each trigger signal being fed to the light curtains (L1-L4), and a measuring process being started in each light curtain (L1-L4) by a received trigger signal after a predetermined delay time, **characterised in that** each trigger signal is fed in parallel to the light curtains (L-L4).

2. A sensor arrangement according to claim 1, **characterised in that** the trigger generator (12) cyclically generates a trigger signal in the form of a trigger pulse within a cycle time.

3. A sensor arrangement according to claim 2, **characterised in that** each measuring process takes a specific measuring time, the measuring times of all light curtains (L1-L4) being within a cycle time.

4. A sensor arrangement according to claim 3, **characterised in that** the delay times are stored in the respective light curtains (L1-L4).

5. A sensor arrangement according to claim 4, **characterised in that** the delay times form adjustable parameters.

6. A sensor arrangement according to one of claims 1 to 5, **characterised in that** the light curtains (L1-L4) and the trigger generator (12) are connected via a line system having lines (10), the light curtains (L1-L4) having only one connection (9) for connecting (9) the lines (10).

7. A sensor arrangement according to claim 6, **characterised in that** the trigger generator (12) is integrated in an external unit which is independent of the light curtains (L1-L4), and **in that** the connections (11) of the light curtains (L1-L4) are in each case designed as inputs.

8. A sensor arrangement according to claim 6, **characterised in that** the trigger generator (12) is integrated in a light curtain (L1-L4), whose connection (9) can optionally be switched as input or output, and **in that** the connections (11) of the remaining light curtains (L1-L4) are each designed as inputs.

9. A sensor arrangement according to one of claims 1 to 8, **characterised in that** a common object detection signal is generated for these or a separate object detection signal is generated for each light curtain (L1-L4).

## Revendications

1. Agencement de capteurs (1) comportant un agencement de rideaux lumineux (L1-L4) et un générateur de déclenchement (12) qui génère cycliquement des signaux de déclenchement, chaque signal de déclenchement étant envoyé aux rideaux lumineux (L1-L4) et un processus de mesure étant lancé dans chaque rideau lumineux (L1-L4) par un signal de déclenchement reçu après un temps de retard prédéterminé, **caractérisé en ce que** chaque signal de déclenchement est envoyé en parallèle avec les rideaux lumineux (L-L4).

2. Agencement de capteurs selon la revendication 1, **caractérisé en ce que** le générateur de déclenchement (12) génère cycliquement un signal de déclenchement sous forme d'une impulsion de déclenchement dans un temps de cycle.

3. Agencement de capteurs selon la revendication 2, **caractérisé en ce que** chaque processus de mesure prend un temps de mesure spécifique, les temps de mesure de tous les rideaux lumineux (L1-L4) étant compris dans un temps de cycle.

4. Agencement de capteurs selon la revendication 3, **caractérisé en ce que** les temps de retard sont mémorisés dans les rideaux lumineux respectifs (L1-L4).

5. Agencement de capteurs selon la revendication 4, **caractérisé en ce que** les temps de retard forment des paramètres réglables.

6. Agencement de capteurs selon l'une des revendications 1 à 5, **caractérisé en ce que** les rideaux lumineux (L1-L4) et le générateur de déclenchement (12) sont reliés par un système de lignes comportant des lignes (10), les rideaux lumineux (L1-L4) ne comportant qu'une seule connexion (9) pour relier (9) les lignes (10).

7. Agencement de capteurs selon la revendication 6, **caractérisé en ce que** le générateur de déclenchement (12) est intégré dans une unité externe indépendante des rideaux lumineux (L1-L4) et **en ce que** les connexions (11) des rideaux lumineux (L1-L4) sont respectivement conçues comme des entrées.

8. Agencement de capteurs selon la revendication 6, **caractérisé en ce que** le générateur de déclenchement (12) est intégré dans un rideau lumineux (L1-L4), dont la connexion (9) peut être commutée au choix comme entrée ou sortie, et **en ce que** les connexions (11) des autres rideaux lumineux (L1-L4) sont chacun conçus comme des entrées.

9. Agencement de capteurs selon l'une des revendications 1 à 8, **caractérisé en ce qu'**un signal de détection d'objet commun est généré pour ces rideaux lumineux ou qu'un signal de détection d'objet séparé est généré pour chaque rideau lumineux (L1-L4).
